# EUROPEAN PATENT SPECIFICATION

(11) **EP 1 489 801 B1**
(45) Date of publication and mention of the grant of the patent: **03.08.2011**
(21) Application number: 04102804.4
(22) Date of filing: 18.06.2004
(51) Int. Cl.: H04L 12/64

(54) **A hybrid network controller**
Steuerung von einem hybriden Netzwerk
Controleur d'un réseau hybride

(30) Priority: 19.06.2003 KR 2003039890
(43) Date of publication of application: 22.12.2004
(73) Proprietor: SAMSUNG ELECTRONICS CO., LTD., Suwon-si, Gyeonggi-Do 442-742 (KR)
(72) Inventor: Lee, Jin-tack, Seoul, (KR)
(74) Representative: Walaski, Jan Filip

(56) References cited:
- EP-A- 1 091 532
- EP-A- 1 265 420
- US-A- 5 452 291
- US-A1- 2002 061 009
- US-A1- 2003 065 816

## Description

The present invention relates to a method and associated apparatus for controlling data transmission over a hybrid network having a wired network interface and a wireless network interface.

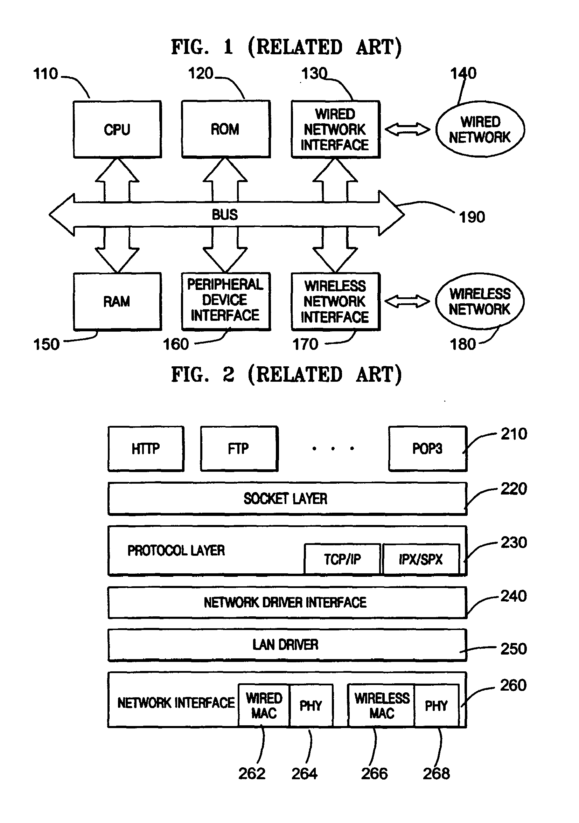

As show in Figure 1, a hybrid wired and wireless communication system includes a central processing unit (CPU) 10, a read-only memory (ROM) 20, a random-access memory (RAM) 50, a peripheral device interface 60 that can be connected to peripheral devices (not shown), a wired network interface 30 that can be connected to a wired network 40, a wireless network interface 70 that can be connected to a wireless network 80, and protocol modules that can communicate with the wired network interface 30 and the wireless network interface 70, respectively. All of these communicate across a bus 90.

To implement networking in a local area network (LAN) using the system of Figure 1, a network interface card (NIC) is required. The NIC includes a physical device (PHY) that is connected to an actual physical media and can perform transmission/reception of a signal. A media access control (MAC) module is provided that performs MAC with respect to a medium using the PHY. The MAC module operates uses a physical address to communicate with another device in a network. A physical address allocated to the NIC is stored in a ROM such as an electrically erasable programmable ROM (EEPROM) or a non-volatile RAM (NVRAM) in a system.

Referring to Figure 2, a LAN driver 250 performing packet transmission/reception through a network is present in an upper layer above the NIC 260. The LAN driver 250 is connected to a protocol module in an upper protocol layer 230, which performs packet flow control and packet transfer, via a network driver interface 240. As shown, the NIC 260 includes a wired MAC 262 with associated PHY 264 and a wireless MAC 266 with associated PHY 268. In the example shown, the protocol layer 230 includes TCP/IP and IPX/SPX protocols. A connection is made secure by using socket layer 220 for protocols 210 such as HTTP, FTP, and POP 3.

The NIC 260 has a 48-bit fixed physical address, and the protocol module in layer 230 uses a logical address such as an Internet Protocol (IP) address to designate an addres s. The physical address and the logical address allow the system to be identified in the network. The physical address is stored in an area such as ROM 120 in the system. This is determined during manufacture and is transmitted to the MAC module 262, 266 during system initiali sation.

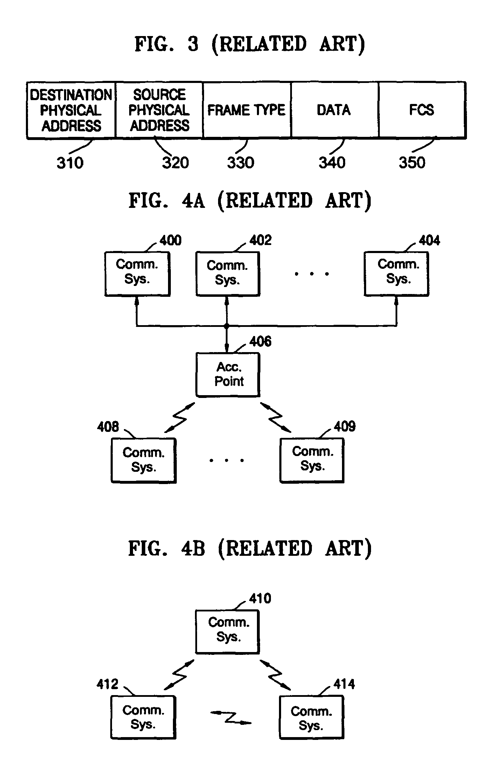

Referring to Figure 3, a destination physical address 310 in the Ethernet frame of Figure 3 indicates a MAC address of a host that is to receive data 340. A source physical address 320 indicates a MAC address of a host tra nsmitting the data 340.
Each of the destination and source physical addresses are 48 bits long. Also, if a first bit is 0, the data 340 is unicast (i.e., transmitted to only one receiving host in the network). If the first bit is 1, the data 340 is multicast (i.e., transmitted to only a number of hosts in the network). If all of the 48 bits are 1, the data 340 is broadcast to all of hosts in the network. Also included are a frame type 330 and a frame check sequence (FCS) 350.

Before the data is transm itted through the network, an address used in a current layer is embedded into a header of a packet. A receiving party analyses the address embedded in the header and determines whether the data has been received correctly. If the address embedded in the header is not identical with the receiving party 's address, the receiving party will not receive the packet or discard s the received packet without processing it.

In a system connected to a network, a packet received via an NIC 260 is transmitted to an application program via an upper protocol module 230 bound with the NIC 260.

Data generated in the application program is transmitted to the network via the protocol module 230 and the NIC 260.

The wireless network interface may be set to operate in an infrastructure mode or an ad-hoc mode. In the ad-hoc mode, a host communicate s with another host in a network in a wireless manner . This communication is done directly between the hosts. In the infrastructure mode on the other hand, a host can communicate with another host in the network via an access point (AP).

Operations in the ad -hoc mode and in the infrastructure mode will be described with reference to FIGS. 4A and 4B below. Figure 4A illustrates a network in the infrastructure mode. The network includes communication systems 400, 402, 404, 408, and 409 and an AP 406 as shown in Figure 1.

Among the communication systems 400, 402, 404, 408, and 409 shown in Figure 4A, one is a hybrid wire and wireless communication system, and the others are various types of communication systems that can communicate either by wire and/or in a wireless manner with the hybrid wire and wireless communication system of Figure 1. For example, where the communication system 408 is the hybrid wire and wireless communication system, when the hybrid wire and wireless communication system 408 communicates in a wireless manner with the communication system 402, the hybrid wire and wireless communication system 408 communicates with the communication system 402 via the AP 406. Alternatively, if the communication system 400 is the hybrid wire and wireless communication system of Figure 1, the hybrid wire and wireless communication system 400 communicates by wire with the communication systems 402 and 404, and communicates with communication systems 408 and 409 via the AP 406 in a wireless manner.

As described above in Figure 4A, a wireless communication mode in which the hybrid wire and wireless communication system communicates with other types of communication systems in a wireless manner not directly but via the AP 406 or the like is referred to as the infrastructure mode.

Figure 4B illustrates a network in the ad -hoc mode. The network includes communication systems 410, 412, and 414. Among the communication systems 410, 412, and 414 shown in Figure 4B, one is the hybrid wire and wireless communication system of Figure 1, and the others are other types of communication systems that can communicate using a wire or in a wireless manner with the hybrid wire and wireless communication system. For example, when a hybrid wire and wireless communication system 410 communicates with the other communication systems 412 and 414 in a wireless manner, the hybrid wire and wireless communication system 410 communicates, in a wireless manner, with the other communication systems 412 and 414 directly and not via the AP 406 shown in Figure 4A or the like. As described above, a wireless communication mode in which a hybrid wire and wireless communication system communicates with another communication system directly and in a wireless manner, without requiring a relay such as the AP 406 is referred to as the ad-hoc mode.

As described above, the hybrid wire and wireless communication system can be simultaneously connected to a wired network 140 and a wireless network by using individual wire and wireless network interfaces 130, 170 as shown in Figure 1 . Here, each network interface 260 shown in Figure 2 needs a physical address identifying the network interface in a network. In other words, the hybrid wire and wireless communication system shown in FIGS. 1 and 2 has two or more MAC modules 262, 266, and two or more physical addresses allocated to the two or more MAC modules 262, 266, respectively. This is because one address will be used in the wired network and the other address will be used in the wireless network.

To overcome this disadvantage, a hybrid wired and wireless communication system using a single physical address has been introduced. Such hybrid wired and wireless communication system includes individual MAC modules, although only one physical address is stored in the associated memory. Further, the system allocates the same physical address to the individual MAC modules. In such a structure, since the individual MAC modules use the same physical address, they are recognized as the same unit by other devices on a network. Accordingly, when the hybrid wire and wireless communication system (both of which use a single physical address) is connected to a wired network, and the wireless network interface is operating in the infrastructure mode, a double link is made. Therefore, packet transmission/reception through the wireless network interface is interrupted.

However; when the wireless network interface operates in the ad-hoc mode, packet transmission/reception through the wireless network interface can be performed even though the hybrid wire and wireless communication system is connected to the wired network. While usable, when the hybrid wired and wireless communication system is connected to the wired network and its wireless network interface operates in the ad-hoc mode, a protocol module in an upper layer 230 above the NIC 260 cannot determine the network interface through which a packet will be transmitted. As a result, the hybrid wire and wireless communication system transmits data through both of the wired and wireless network interfaces, and a packet is redundantly transmitted through either the wired or wireless networks. Consequently, traffic of one network is loaded onto another network, which causes unnecessary use of bandwidth.

The present invention is defined by the appended claims.

The present invention is advantageous because the data to be transmitted to a device is only transmitted over the network to which the device is connected. This reduces the amount of unnecessary traffic over a network and also ensures that devices on the network are not inundated with unnecessary data.

An embodiment of the present invention will now be described, by way of example only, with reference to Figures 5 - 10, in which:
Figure 1 is a block diagram of a known hybrid wired and wireless communication system;
Figure 2 is a block diagram of a known network system;
Figure 3 illustrates a structure of a known Ethernet frame;
Figure 4A illustrates a network in a known infrastructure mode;
Figure 4B illustrates a network in a known ad-hoc mode;
Figure 5 is a block diagram of a hybrid wired and wireless communication system according to an embodiment of the present invention;
Figure 6 illustrates a structure of a management list according to an embodiment of the present invention;
Figure 7 is a flowchart of a system initiali sation procedure according to an embodiment of the present invention;
Figure 8 is a flowchart of a communication method when a wireless communication mode is the ad -hoc mode, according to an embodiment of the pres ent invention;
Figure 9 is a detailed flowchart of an operation of generating a management list and registering a physical address shown in Figure 8; and
Figure 10 is a flowchart of an operation of managing an entry in a management list that is performed by a storage unit shown in Figure 5 according to an embodiment of the present invention.

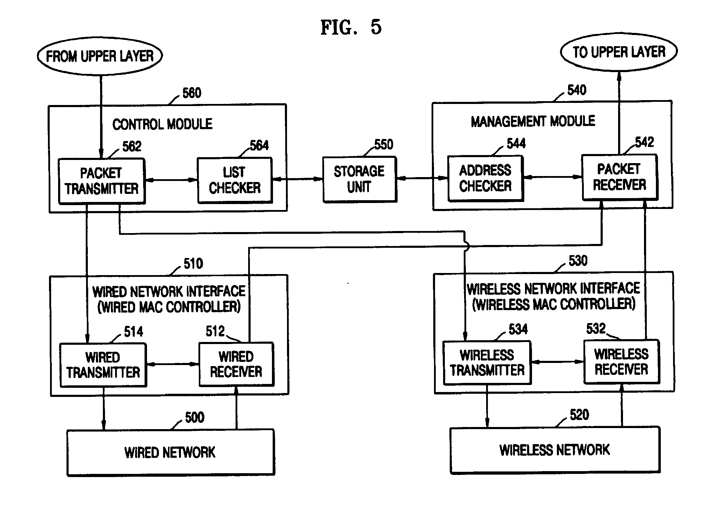

Referring to Figure 5, a hybrid wired and wireless communication system includes a wired network interface 510 connected to a wired network 500, a wireless network interface 530 connected to a wireless network 520, a management module 540, a storage unit 550, and a control module 560. The management module 540 receives packets through the wired network interface 510 and the wireless network interface 530, registers a physical address of the source of the received packet in a management list, and transmits the received packet to an upper layer. The storage unit 550 stores and updates the management list which includes a plurality of management entries. Each of the entries includes a physical address of the source of the received packet and an interface number indicating which of the wired network interface 510 or the wireless network interface 530 is linked to the physical address.

The control module 560 receives a t ransmission packet from an upper layer, checks whether the physical address of a source for the transmission packet is present in the management list stored in the storage unit 560, and selectively transmits the transmission packet through the wired or wir eless network interface 510 or 530 according to the interface number linked to the physical address in the management list. This occurs when the physical address is present in the management list. The management module 540 and the control module 560 are implemented on a known local area network (LAN) driver as shown in Figure 2, which is understood by those skilled in the art. While not shown in Figure 5, it is understood that the CPU 100, ROM 120, Interface 160, RAM 150, and/or BUS 190 of Figure 1 will be included in the system shown in Figure 5 according to the present invention. However, it is understood that the system can be otherwise configured and/or used with the network types other than LAN, such as wide area networks (WAN), public and private networks such as the internet and intranets, and/or in any communication medium by which a device connected to the network utilizes identification for transmission and/or reception of data.

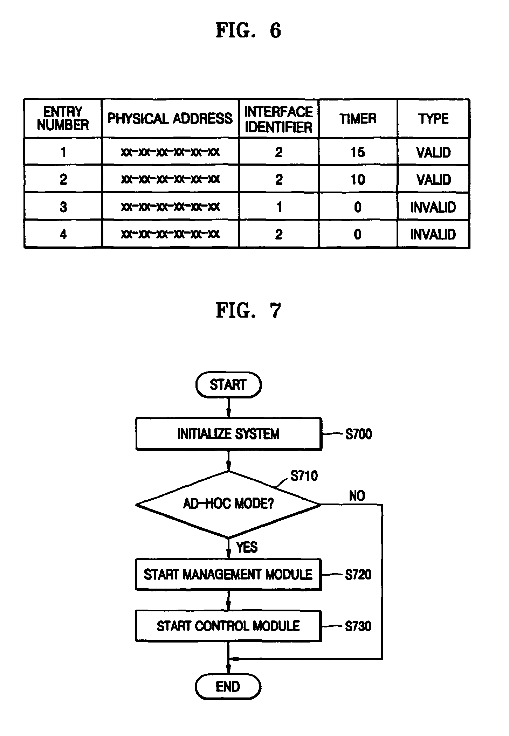

Referring to Figure 6, the management list includes a physical address item, an interface number item, and a timer item. The management list shown in Figure 6 further includes an optional type item. This type item indicates whether an entry is valid or invalid according to the timer item . It should be noted that the t ype item is optional to the working of the invention. Further, it is understood that the management list could include additional information, and that items in the management list could be combined to reduce the number of entries according to the inventi on.

A physical address in the management list indicates the media access control (MAC) address of the source of the received packet included in the packet frame shown in Figure 3. In the shown embodiment of the present invention, the physical address is 48 bits in length. However, it is understood that the physical address can have other lengths and formats.

An interface number (or interface identifier) in the management list is an identifier indicating which of the the wired network interface 510 or the wireless network interface 530 that received the packet. In other words, the interface number indicates a network interface linked to the physical address. As shown, the identifier number "2" indicates the wired interface 510, and the identifier number "1" indicates the wireless interface 530.

To prevent the occurrence of unnecessary traffic and other such problems, whenever a packet is received, the management list records the physical address of the source transmitting the packet and the associated interface number indicating whether a network interface linked to the physical address is wired or wireless. When a transmission packet is generated in the upper layer for transmission to a physical address corresponding to a physical address in the manage ment list, the transmission packet is transmitted through either the wired or wireless network only. The choice of the network is made in accordance with the the interface number linked to the physical address in the management list. Accordingly, the physical address item and the interface number item are essential to the management list in the embodiment shown in Figure 6. However, it is understood that, if the physical address and identifier can be otherwise combined or where the identifier of the interface 510, 530 can be otherwise correlated or conveyed using a single entry and/or other entry, the management list need not include both the physical address and the identifier in the form shown in Figure 6. For example, the first bit of the stored physical address may indicate whether the wired or wireless network should be used.

A timer indicates the length of time which has passed from the generation of the entry (i.e. when the physical address is added to the management list) to the removal of the entry from the management list. A type indicates whether an entry is valid and should remain in the management list, or is invalid and is to be removed from the management list. It is understood that the type can also indicate other information of interest , and that the type need not be used, for example if the system removes the entry as soon as the a specified period of time has elapsed.

In the described embodiment, to increase storage efficiency of the management list, a length of time is defined. The entry is stored for this time. In detail, the timer item is included in the management list, and an initial value of the timer item is set. Thereafter, a value of the timer item is increased or decreased, and when a predetermined time elapses, an entry ha ving an expiring timer is removed from the management list. Before the time expires, if another packet is received from the same physical address, the timer is initialised. When the time expires, the type for that entry is set to invalid indicating that the entry is to be deleted. The system then deletes the entry. Otherwise, the type is set to valid. This means that the type item indicates whether a corresponding entry is to be removed. However, it is understood that the timer and/or type fields are optional and, as such, need not be used is all aspects of the invention, such as where a record of transmission and/or reception is desired.

Referring to Figure 7, when a hybrid wired and wireless communication system is supplied with electric al power and is booted, the system is initialised is in operation S700. In the system initialisation, a single physical address stored in a memory unit (not shown) is transmitted to the LAN driver. The LAN driver includes the management module 540 and the control module 560. The LAN driver allocates the physical address to each network interface 510, 530 of the hybrid wired and wireless communication system to initiali se a MAC module. The LAN driver then initialises a transmitter and a receiver of each network inte rface 510, 530.

After the system initiali sation in operation S700, the LAN driver checks the operating mode and state of the wired network interface 510 and the wireless network interface 530. In particular, the LAN driver checks whether the wireless communication mode is the ad-hoc mode (in operation S710). When the wireless communication mode is the ad-hoc mode, the management module 540 and the control module 560 begin operation S720, S730. When the wireless communication mode is not the ad -hoc mode, operations S720 and S730 are not performed.

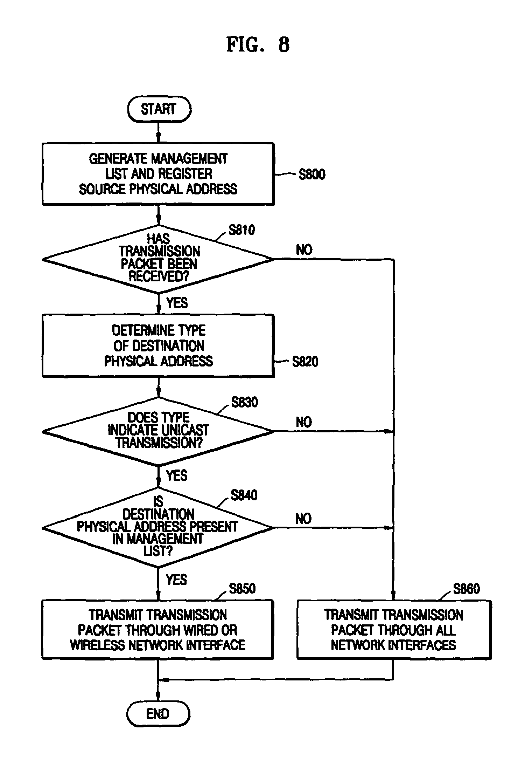

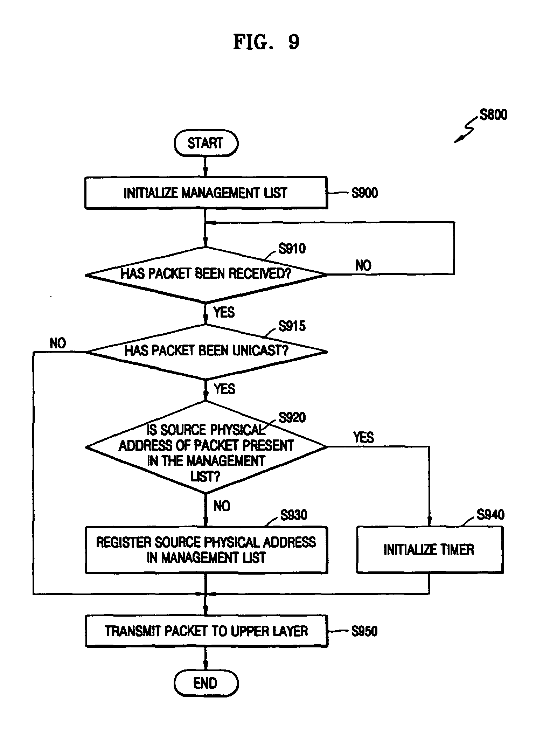

Referring to Figure 8, the management module 540 generates the management list shown in Figure 6 using a received packet and registers a source physical address included in the received packet in the management list in operation S800. An embodiment of operation S800 will be described in detail with further reference to Figure 9 below.

When a hybrid wired and wireless communication system is started and the management module 540 is started in the ad -hoc mode, the storage unit 550 initialises the management list in operation S900. Thereafter, a packet receiver 542 included in the management module 540 determines whether a packet has been received from a wired receiver 512 included in the wired network interface 510 or a wireless receiver 532 included in the wireless network interface 530 in operation S910. If it is determined that a packet has been received, an address checker 544 included in the management module 540 checks the source physical address included in the received packet to determine whether the source physical address indicates a unicast transmission. This is performed in operation S915.

If the source physical address indicates broadcast or multicast transmission, the address checker 544 just transmits the received packet to an upper layer in operation S950 without performing operations S930 or S920. If the source physical address indicates unicast transmission, the address checker 544 determines , with reference to the storage unit 550, whether the source physical address, (i.e., the source MAC address) is present in the management list. This is performed in operation S920. It is understood, however, that operation S915 is optional and thus, need not be performed. If operation S915 is not perfo rmed, operation 920 is performed regardless of whether the packet is unicast, broadcast, and /or multicast. Also operation S915 may be performed only for selected packets which are unicast, multicast, and/or broadcast.

If the source physical address is not present in the management list, the management module 540 registers the source physical address and the interface number which indicates a network interface to be linked to the source physical address in the management list. This information is stored in the storage unit 550 in operation S930. By way of example, in the management list shown in Figure 6 , when the wireless network interface 530 is linked to the source physical address, the interface number is set to "1", and when the wired network interface 510 is linked to the source physical address, the interface number is set to "2". In addition, the management module 540 sets a timer to an initial value in operation S930 and transmits the received packet to the upper layer in operation S950.

Meanwhile, if the source physical address is present in the management list, the storage unit 550 resets to the initial value a timer corresponding to the source physical address in operation S940 and the management module 540 transmits the received packet to the upper layer in operation S950.

Referring back to Figure 8, after the management list is generated, the control module 560 is started and the packet transmitter 562 included in the control module 560 determines whether the packet to be transmitted over one of the networks has been received from the upper layer in operation S810. If the packet transmitter 562 has received the transmission packet from the upper layer, the list checker 564 included in the control module 560 checks the transmission packet to determine whether the destination physical address included in the transmission packet indicates unicast transmission, multicast transmission, or broadcast transmission. This is performed in operation S830. However, it is understood that operation S830 is optional and, as such, need not be performed in all aspects of the invention.

If it is indicated that multicast or broadcast transmission of the transmission packet should be made, the packet transmitter transmits the transmission packet to both of the wired transmitter 514 and the wireless transmitter 534 so that the transmission packet is transmitted over both of the wired network 500 and the wireless network 520 . This is performed in operation S860. If it is indicated that unicast transmission of the transmission packet should be made , the list checker 564 determines whether the destination physical address of the transmission packet is present in the management list in operation S840. The list checker 564 achieves this by referring to the storage unit 550 If the destination physical address of the transmission packet is present in the management list, the packet transmitter 562 transmits the transmission packet to the destination address through either the wired network interface 510 or the wireless network interface 530 depending on the interface number which corresponds to the destination physical address stored in the management list. This is performed in operation S850. In detail, when the interface number indicates the wired network interface 510, the packet transmitter 562 transmits the transmission packet to the wired transmitter 514 without transmitting through the wireless transmitter 534 . When the interface number indicates the wireless network interface 530, the packet transmitter 562 transmits the transmission packet to the wireless transmitter 534 without transmitting through the wired transmitter 514 .

However, if the destination physical address of the transmission packet is not present in the management list, the packet transmitt er 562 transmits the transmission packet to both of the wired transmitter 514 and the wireless transmitter 534 so that the transmission packet is transmitted over both the wired and wireless networks 500 and 520. This is performed in operation S860. However, it is understood that, instead of transmitting through both transmitters 514, 534, the transmission could be through a default one of the transmitters 514, 534 or through one of the transmitters 514, 534 having the least traffic.

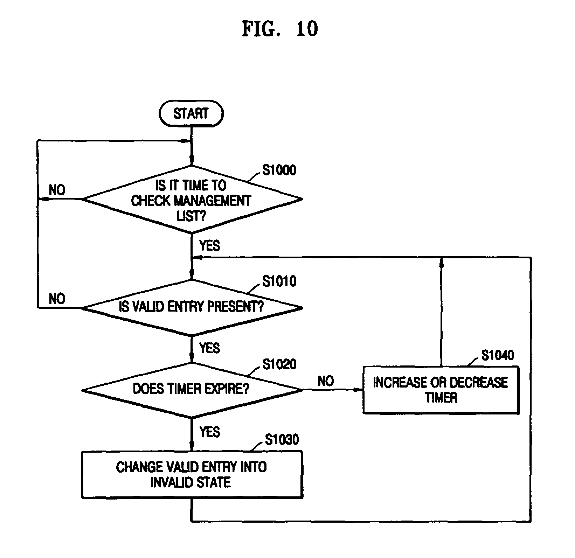

Referring to Figure 10, the storage unit 550 stores the management list. The storage unit 550 periodically checks the timer item in the management list in operation S1000 , and determines whether a valid entry is present in the management list in operation S1010.

The storage unit 550 determines whether any valid entry has an expir ed timer in operation S1020. If any valid entry has an expired timer, the storage unit 550 changes the valid entry into an invalid state to indicate an entry which may be removed from the management list in operation 1030. If there is no entry having an expir ed timer, all timers are increased or decreased in operation S1040. For example, when an initial value of a timer is 20 and a value of 0 denotes expiration of the timer, the timer is decreased by 1. Conversely, when the initial value of the timer is 0 and the value 20 denotes the expiration, the timer is increased by 1. While not shown in Figure 10, where the timer has expired, the storage unit 550 removes the entry having the expired timer. Additionally, the timer entry can be increased by 1 or reset when a packet is received from the physical address so as to prevent the premature removal of an entry from the management list where the physical address relates to another system which is communicating data packets.

An aspect of the invention can also be embodied as computer readable codes on a computer readable recording medium or media for use with one or more computers. The computer readable recording medium is any data storage device that can store data which can be thereafter read by a computer system. Examples of the computer readable recording medium include read -only memory (ROM), random -access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

It is understood that, according to an aspect of the invention, the management list can be otherwise updated and can be created by other devices without requiring reception of a packet from a source. Moreover, while shown as having two interfaces 510, 530, it is understood that the management list of an aspect of the present invention can be used with a plurality of interfaces for use in systems having multiple network connections and sharing a common address.

A hybrid wired and wireless communication system according to the present invention uses a single physical address for both of wired and wireless network interfaces, and whenever a packet is received, records a physical address of a source transmitting the packet and an interface number indicating whether a network interface linked to the physical address is wired or wireless in a management list. Thereafter, when a transmission packet generated in an upper layer is transmitted to the physical address in the management list, the hybrid wired and wireless com munication system selectively transmits the transmission packet through either of the wired network interface and the wireless network interface according to the interface number linked to the physical address in the management list. Therefore, an aspect of the present invention prevents traffic of one network from being loaded onto another network, thereby preventing dissipation of a bandwidth.

## Claims

1. A method of controlling data transmission over a hybrid network having a wired network interface and a wireless network interface, the wireless network interface and the wired network interface having the same physical address, the method comprising:
receiving a first packet via one of the interfaces; and
transmitting a second packet with a destination physical address corresponding to a source physical address included in the first packet, the second packet being transmitted across the network interface as indicated by a network identifier associated with the source physical address, wherein the network identifier identifies the network interface through which the first packet was received.

2. A method according to claim 1, comprising:
associating timing information with the source physical address; and
deleting the source physical address when the timing information reaches a predefined limit.

3. A method as claimed in claim 1, for a hybrid wired and wireless communication system capable of communicating by wire and wirelessly in a local area network,
comprising registering an entry by storing the source physical address and the network identifier in a predetermined management list; and
wherein the transmitting step comprises receiving a transmission packet from an upper layer of the system and determining whether a destination address of a packet to be transmitted is identical to the source physical address present in the management list.

4. The method of claim 3, wherein the entry further comprises:
an indication of whether the entry relates to a system which is communicating data packets.

5. The method of claim 4, wherein the registering of the entry comprises:
deleting the entry when a predetermined time passes, based on a validity indication stored in the management list.

6. The method of claim 3, wherein the registering of the entry comprises:
transmitting the received packet to the upper layer;
determining whether the source physical address of the received packet is present in the management list; and
when the source physical address is not present in the management list, registering the source physical address and the network identifier in the management list.

7. The method of claim 6, wherein the entry further comprises:
an indication of whether the entry relates to a system which is communicating data packets.

8. The method of claim 3, wherein the operation of receiving the packet and determining whether the source physical address is identical with the destination physical address of the packet is present comprises:
determining whether the destination physical address indicates a unicast transmission; and
when the destination physical address is determined to indicate the unicast transmission, determining whether the source physical address identical to the destination physical address of the packet is present in the management list.

9. The method of claim 3, wherein the transmitting of the packet comprises transmitting the packet through the wired network interface and the wireless network interface when the destination physical address is not present in the management list.

10. The method of claim 3, wherein the registering of the entry, the operation of receiving the packet and determining whether the source physical address is identical with the destination physical address of the packet is present, and the selectively transmitting the packet through one of the wired network interface and the wireless network interface according to the identifier are performed when a wireless communication mode of the hybrid wired and wireless communication system is an ad-hoc mode.

11. The method of claim 3, wherein:
the management list comprises at least one source physical address and an interface identifier corresponding to the source physical address.

12. The method of claim 11, wherein:
the management list further comprises an indication of whether the entry relates to a system which is communicating data packets.

13. The method of claim 12, wherein the management list further comprises a validity indication.

14. The method of claim 13, wherein the entry is deleted when a predetermined time passes, based on the validity indication.

15. The method of claim 13, further comprising, if a packet is received from a same physical address as the source physical address, resetting the validity indication.

16. The method of claim 3, wherein the first and second interfaces share a common physical address such that a first packet received at the first interface through the first network is addressed to the common physical address and a second packet received at the second interface through the second network is addressed to the common physical address.

17. A signal representing program codes for controlling a computer, having a wireless networking capability, to perform a method according to either any of claims 1 to 16.

18. A data carrier having a signal according to claim 17 recorded thereon or therein.

19. An apparatus for controlling data transmission over a hybrid network having a wired network interface (500) and a wireless network interface (520), the wireless network interface and the wired network interface having the same physical address, the apparatus comprising:
means (542) for receiving a first packet via one of the interfaces (500, 520); and
means (560) for transmitting a second packet with a destination physical address corresponding to a source physical address included in the first packet, the means for transmitting being arranged to transmit the second packet using a network interface as indicated by a network identifier associated with the source physical address, wherein the network identifier identifies the network interface through which the first packet was received.

20. An apparatus according to claim 19, comprising:
means (550) for storing timing information in association with the source physical address; and
means (540) for deleting the source physical address when the timing information reaches a predefined limit.

21. A network interface card comprising:
a first adapter connectable to the wired part of the hybrid network;
a second adapter connectable to the wireless part of the hybrid; and
an apparatus according to either claim 19 or claim 20.

22. A computer containing a network interface card according to claim 21.

23. A hybrid wired and wireless communication system capable of communicating by wire and wirelessly in a local area network, the hybrid wired and wireless communication system comprising apparatus as claimed in claim 19 and additionally comprising;
means operable to receive and transmit packets through an upper layer;
a storage unit operable to store a management list comprising the source physical address of a source transmitting a packet and the network identifier;
a management module operable when the source physical address of a received packet is not present in the management list, newly to register the source physical address and a network identifier corresponding to the source physical address in the management list;
a control module operable selectively to transmit the packet through one of the wired network interface and the wireless network interface according to the network identifier corresponding to a destination physical address of the packet when the destination physical address is present in the management list;
the wired network interface operable to receive and transmit the packet through the wired network connected thereto; and
the wireless network interface operable to receive and transmit the packet through the wireless network connected thereto.

24. The hybrid wired and wireless communication system of claim 23, wherein each entry further comprises an indication of whether the entry relates to a system which is communicating data packets.

25. The hybrid wired and wireless communication system of claim 24, wherein the storage unit is operable to delete the entry when a predetermined time passes, based on a validity indication stored in the management list.

26. The hybrid wired and wireless communication system of claim 24, wherein, if a packet is received from a same physical address as the source physical address, the control module is operable to reset the validity indication.

27. The hybrid wired and wireless communication system of claim 23, wherein the control module is operable when the destination physical address is determined to indicate the unicast, to determine whether the destination physical address indicates a unicast transmission, and to determine whether a source physical address identical to the destination physical address of the packet is present in the management list.

28. The hybrid wired and wireless communication system of claim 23, wherein the control module is operable to transmit the packet through the wired network interface and the wireless network interface when the destination physical address is not registered in the management list.

29. The hybrid wired and wireless communication system of claim 23, wherein the hybrid wired and wireless communication system is operable when a wireless communication mode is an ad-hoc mode.

30. The hybrid wired and wireless communication system of claim 23, wherein:
the control module is operable to delete the entry when a predetermined time passes, based on a validity indication stored in the management list.

31. The hybrid wired and wireless communication system of claim 30, wherein:
the management list comprises at least one source physical address and an interface identifier corresponding to the source physical address.

32. The hybrid wired and wireless communication system of claim 31, wherein:
if a packet is received from the same physical address as the physical address of the source, the control module is operable to reset the validity indication.

33. The hybrid wired and wireless communication system of claim 32, wherein:
the control module is operable to delete the entry when a predetermined time passes, based on the validity indication.

## Patentansprüche

1. Verfahren zur Steuerung einer Datenübertragung über ein Hybridnetz mit einer drahtgebundenen Netzschnittstelle und einer drahtlosen Netzschnittstelle, wobei die drahtlose Netzschnittstelle und die drahtgebundene Netzschnittstelle dieselbe physikalische Adresse haben, wobei das Verfahren Folgendes umfasst:
Empfangen eines ersten Pakets über eine der Schnittstellen und
Übertragen eines zweiten Pakets mit einer physikalischen Zieladresse, die einer physikalischen Ursprungsadresse entspricht, die in dem ersten Paket enthalten ist, wobei das zweite Paket über die Netzschnittstelle übertragen wird, wie von einer Netzkennung angezeigt, die mit der physikalischen Ursprungsadresse verbunden ist, wobei die Netzkennung die Netzschnittstelle identifiziert, durch die das erste Paket empfangen wurde.

2. Verfahren nach Anspruch 1, das Folgendes umfasst:
Verbinden einer Zeitsteuerungsinformation mit der physikalischen Ursprungsadresse und
Löschen der physikalischen Ursprungsadresse, wenn die Zeitsteuerungsinformation einen vorher festgelegten Grenzwert erreicht.

3. Verfahren nach Anspruch 1 für ein drahtgebundenes und drahtloses Hybridkommunikationssystem, das in einem lokalen Netz über eine Drahtverbindung und drahtlos Daten übermitteln kann,
wobei das Verfahren das Registrieren einer Eingabe umfasst, indem die physikalische Ursprungsadresse und die Netzkennung in einer vorgegebenen Verwaltungsliste gespeichert werden; und
wobei der Übertragungsschritt das Empfangen eines Übertragungspakets von einer oberen Schicht des Systems und das Bestimmen, ob eine Zieladresse eines zu übertragenden Pakets mit der in der Verwaltungsliste vorhandenen physikalischen Ursprungsadresse identisch ist, umfasst.

4. Verfahren nach Anspruch 3, wobei die Eingabe weiterhin Folgendes umfasst:
eine Angabe, ob die Eingabe sich auf ein System bezieht, das Datenpakete übermittelt.

5. Verfahren nach Anspruch 4, wobei das Registrieren der Eingabe Folgendes umfasst:
Löschen der Eingabe, wenn eine vorgegebene Zeit abläuft, auf Grundlage einer Gültigkeitsangabe, die in der Verwaltungsliste gespeichert ist.

6. Verfahren nach Anspruch 3, wobei das Registrieren der Eingabe Folgendes umfasst:
Übertragen des empfangenen Pakets an die obere Schicht;
Bestimmen, ob die physikalische Ursprungsadresse des empfangenen Pakets in der Verwaltungsliste vorhanden ist; und
wenn die physikalische Ursprungsadresse nicht in der Verwaltungsliste vorhanden ist, Registrieren der physikalischen Ursprungsadresse und der Netzkennung in der Verwaltungsliste.

7. Verfahren nach Anspruch 6, wobei die Eingabe weiterhin Folgendes umfasst:
eine Angabe, ob die Eingabe sich auf ein System bezieht, das Datenpakete übermittelt.

8. Verfahren nach Anspruch 3, wobei der Vorgang des Empfangens des Pakets und des Bestimmens, ob die physikalische Ursprungsadresse, die mit der physikalischen Zieladresse des Pakets identisch ist, vorhanden ist, Folgendes umfasst:
Bestimmen, ob die physikalische Zieladresse eine Unicast-Übertragung anzeigt; und
wenn von der physikalischen Zieladresse bestimmt wird, dass sie die Unicast-Übertragung anzeigt, Bestimmen, ob die physikalische Ursprungsadresse, die mit der physikalischen Zieladresse des Pakets identisch ist, in der Verwaltungsliste vorhanden ist.

9. Verfahren nach Anspruch 3, wobei das Übertragen des Pakets das Übertragen des Pakets durch die drahtgebundene Netzschnittstelle und die drahtlose Netzschnittstelle umfasst, wenn die physikalische Zieladresse nicht in der Verwaltungsliste vorhanden ist.

10. Verfahren nach Anspruch 3, wobei das Registrieren der Eingabe, der Vorgang des Empfangens des Pakets und des Bestimmens, ob die physikalische Ursprungsadresse, die mit der physikalischen Zieladresse des Pakets identisch ist, vorhanden ist, und das gezielte Übertragen des Pakets durch die drahtgebundene Netzschnittstelle oder die drahtlose Netzschnittstelle entsprechend der Kennung durchgeführt werden, wenn ein drahtloser Kommunikationsmodus des drahtgebundenen und drahtlosen Hybridkommunikationssystems ein Ad-hoc-Modus ist.

11. Verfahren nach Anspruch 3, wobei:
die Verwaltungsliste mindestens eine physikalische Ursprungsadresse und eine Schnittstellenkennung, die der physikalischen Ursprungsadresse entspricht, umfasst.

12. Verfahren nach Anspruch 11, wobei:
die Verwaltungsliste weiterhin eine Angabe, ob die Eingabe sich auf ein System bezieht, das Datenpakete übermittelt, umfasst.

13. Verfahren nach Anspruch 12, wobei die Verwaltungsliste weiterhin eine Gültigkeitsangabe umfasst.

14. Verfahren nach Anspruch 13, wobei die Eingabe auf Grundlage der Gültigkeitsangabe gelöscht wird, wenn eine vorgegebene Zeit abläuft.

15. Verfahren nach Anspruch 13, das weiterhin das Rücksetzen der Gültigkeitsangabe, wenn ein Paket von derselben physikalischen Adresse wie die physikalische Ursprungsadresse empfangen wird, umfasst.

16. Verfahren nach Anspruch 3, wobei sich die erste und die zweite Schnittstelle eine gemeinsame physikalische Adresse teilen, so dass ein erstes Paket, das an der ersten Schnittstelle durch das erste Netz empfangen wird, an die gemeinsame physikalische Adresse adressiert wird und ein zweites Paket, das an der zweiten Schnittstelle durch das zweite Netz empfangen wird, an die gemeinsame physikalische Adresse adressiert wird.

17. Signal, das Programmcodes zum Steuern eines Computers mit einer Funktion zur drahtlosen Vernetzung darstellt, zur Durchführung eines Verfahrens nach einem der Ansprüche 1 bis 16.

18. Datenträger mit einem Signal nach Anspruch 17, das darauf oder darin aufgezeichnet ist.

19. Vorrichtung zur Steuerung einer Datenübertragung über ein Hybridnetz mit einer drahtgebundenen Netzschnittstelle (500) und einer drahtlosen Netzschnittstelle (520), wobei die drahtlose Netzschnittstelle und die drahtgebundene Netzschnittstelle dieselbe physikalische Adresse haben, wobei die Vorrichtung Folgendes umfasst:
Mittel (542) zum Empfangen eines ersten Pakets über eine der Schnittstellen (500, 520) und
Mittel (560) zum Übertragen eines zweiten Pakets mit einer physikalischen Zieladresse, die einer physikalischen Ursprungsadresse entspricht, die in dem ersten Paket enthalten ist, wobei die Mittel zum Übertragen dazu eingerichtet sind, das zweite Paket unter Verwendung einer Netzschnittstelle zu übertragen, wie von einer Netzkennung angezeigt, die mit der physikalischen Ursprungsadresse verbunden ist, wobei die Netzkennung die Netzschnittstelle identifiziert, durch die das erste Paket empfangen wurde.

20. Vorrichtung nach Anspruch 19, die Folgendes umfasst:
Mittel (550) zum Speichern einer Zeitsteuerungsinformation in Verbindung mit der physikalischen Ursprungsadresse und
Mittel (540) zum Löschen der physikalischen Ursprungsadresse, wenn die Zeitsteuerungsinformation einen vorher festgelegten Grenzwert erreicht.

21. Netzschnittstellenkarte, die Folgendes umfasst:
einen ersten Adapter, der an den drahtgebundenen Teil des Hybridnetzes angeschlossen werden kann;
einen zweiten Adapter, der an den drahtlosen Teil des Hybrids angeschlossen werden kann; und
eine Vorrichtung nach Anspruch 19 oder 20.

22. Computer, der eine Netzschnittstellenkarte nach Anspruch 21 enthält.

23. Drahtgebundenes und drahtloses Hybridkommunikationssystem, das in einem lokalen Netz über eine Drahtverbindung und drahtlos Daten übermitteln kann, wobei das drahtgebundene und drahtlose Hybridkommunikationssystem eine Vorrichtung nach Anspruch 19 umfasst und zusätzlich Folgendes umfasst:
Mittel, die zum Empfangen und Übertragen von Paketen durch eine obere Schicht betrieben werden können;
eine Speichereinheit, die zum Speichern einer Verwaltungsliste betrieben werden kann, die die physikalische Ursprungsadresse einer Quelle, die ein Paket überträgt, und die Netzkennung umfasst;
ein Verwaltungsmodul, das, wenn die physikalische Ursprungsadresse eines empfangenen Pakets nicht in der Verwaltungsliste vorhanden ist, zum neuen Registrieren der physikalischen Ursprungsadresse und einer Netzkennung, die der physikalischen Ursprungsadresse entspricht, in der Verwaltungsliste betrieben werden kann;
ein Steuermodul, das zum gezielten Übertragen des Pakets durch die drahtgebundene Netzschnittstelle oder die drahtlose Netzschnittstelle entsprechend der Netzkennung, die einer physikalischen Zieladresse des Pakets entspricht, betrieben werden kann, wenn die physikalische Zieladresse in der Verwaltungsliste vorhanden ist;
die drahtgebundene Netzschnittstelle, die zum Empfangen und Übertragen des Pakets durch das daran angeschlossene drahtgebundene Netz betrieben werden kann; und
die drahtlose Netzschnittstelle, die zum Empfangen und Übertragen des Pakets durch das daran angeschlossene drahtlose Netz betrieben werden kann.

24. Drahtgebundenes und drahtloses Hybridkommunikationssystem nach Anspruch 23, wobei jede Eingabe weiterhin eine Angabe, ob die Eingabe sich auf ein System bezieht, das Datenpakete übermittelt, umfasst.

25. Drahtgebundenes und drahtloses Hybridkommunikationssystem nach Anspruch 24, wobei die Speichereinheit dazu betrieben werden kann, die Eingabe auf Grundlage einer Gültigkeitsangabe, die in der Verwaltungsliste gespeichert ist, zu löschen, wenn eine vorgegebene Zeit abläuft.

26. Drahtgebundenes und drahtloses Hybridkommunikationssystem nach Anspruch 24, wobei, wenn ein Paket von derselben physikalischen Adresse wie die physikalische Ursprungsadresse empfangen wird, das Steuermodul dazu betrieben werden kann, die Gültigkeitsangabe rückzusetzen.

27. Drahtgebundenes und drahtloses Hybridkommunikationssystem nach Anspruch 23, wobei das Steuermodul dazu betrieben werden kann, wenn von der physikalischen Zieladresse bestimmt wird, dass sie das Unicasting anzeigt, zu bestimmen, ob die physikalische Zieladresse eine Unicast-Übertragung anzeigt, und zu bestimmen, ob eine physikalische Ursprungsadresse, die mit der physikalischen Zieladresse des Pakets identisch ist, in der Verwaltungsliste vorhanden ist.

28. Drahtgebundenes und drahtloses Hybridkommunikationssystem nach Anspruch 23, wobei das Steuermodul dazu betrieben werden kann, das Paket durch die drahtgebundene Netzschnittstelle und die drahtlose Netzschnittstelle zu übertragen, wenn die physikalische Zieladresse nicht in der Verwaltungsliste registriert ist.

29. Drahtgebundenes und drahtloses Hybridkommunikationssystem nach Anspruch 23, wobei das drahtgebundene und drahtlose Hybridkommunikationssystem betrieben werden kann, wenn ein drahtloser Kommunikationsmodus ein Ad-hoc-Modus ist.

30. Drahtgebundenes und drahtloses Hybridkommunikationssystem nach Anspruch 23, wobei:
das Steuermodul dazu betrieben werden kann, die Eingabe auf Grundlage einer Gültigkeitsangabe, die in der Verwaltungsliste gespeichert ist, zu löschen, wenn eine vorgegebene Zeit abläuft.

31. Drahtgebundenes und drahtloses Hybridkommunikationssystem nach Anspruch 30, wobei:
die Verwaltungsliste mindestens eine physikalische Ursprungsadresse und eine Schnittstellenkennung, die der physikalischen Ursprungsadresse entspricht, umfasst.

32. Drahtgebundenes und drahtloses Hybridkommunikationssystem nach Anspruch 31, wobei:
wenn ein Paket von derselben physikalischen Adresse wie die physikalische Adresse des Ursprungs empfangen wird, das Steuermodul dazu betrieben werden kann, die Gültigkeitsangabe rückzusetzen.

33. Drahtgebundenes und drahtloses Hybridkommunikationssystem nach Anspruch 32, wobei:
das Steuermodul dazu betrieben werden kann, die Eingabe auf Grundlage der Gültigkeitsangabe zu löschen, wenn eine vorgegebene Zeit abläuft.

## Revendications

1. Procédé de commande de transmission de données sur un réseau hybride ayant une interface de réseau filaire et une interface de réseau sans fil, l'interface de réseau sans fil et l'interface de réseau filaire ayant la même adresse physique, le procédé comprenant :
la réception d'un premier paquet par l'intermédiaire de l'une des interfaces ; et
la transmission d'un second paquet ayant une adresse physique de destination correspondant à une adresse physique de source incluse dans le premier paquet, le second paquet étant transmis par le biais de l'interface de réseau indiquée par un identifiant de réseau associé à l'adresse physique de source, l'identifiant de réseau identifiant l'interface de réseau par le biais de laquelle le premier paquet a été reçu.

2. Procédé selon la revendication 1, comprenant :
l'association d'informations de cadencement à l'adresse physique de source ; et
la suppression de l'adresse physique de source quand les informations de cadencement atteignent une limite prédéfinie.

3. Procédé selon la revendication 1, pour un système de communication filaire et sans fil hybride capable de communiquer par fil et sans fil dans un réseau local,
comprenant l'enregistrement d'une entrée en mémorisant l'adresse physique de source et l'identifiant de réseau dans une liste de gestion prédéterminée ; et
dans lequel l'étape de transmission comprend la réception d'un paquet de transmission depuis une couche supérieure du système et la détermination si une adresse de destination d'un paquet à transmettre est identique ou non à l'adresse physique de source présence dans la liste de gestion.

4. Procédé selon la revendication 3, dans lequel l'entrée comprend en outre :
une indication si l'entrée se rapporte ou non à un système qui communique des paquets de données.

5. Procédé selon la revendication 4, dans lequel l'enregistrement de l'entrée comprend :
la suppression de l'entrée quand une durée prédéterminée expire, en fonction d'une indication de validité mémorisée dans la liste de gestion.

6. Procédé selon la revendication 3, dans lequel l'enregistrement de l'entrée comprend :
la transmission à la couche supérieure du paquet reçu ;
la détermination si l'adresse physique de source du paquet reçu figure ou non dans la liste de gestion ; et
quand l'adresse physique de source ne figure pas dans la liste de gestion, l'enregistrement de l'adresse physique de source et de l'identifiant de réseau dans la liste de gestion.

7. Procédé selon la revendication 6, dans lequel l'entrée comprend en outre :
une indication si l'entrée concerne ou non un système qui communique des paquets de données.

8. Procédé selon la revendication 3, dans lequel l'opération de réception du paquet et de détermination si l'adresse physique de source est identique ou non à l'adresse physique de destination du paquet figure ou non comprend :
la détermination si l'adresse physique de destination indique ou non une transmission en monodiffusion ; et
quand il est déterminé que l'adresse physique de destination indique une transmission en monodiffusion, la détermination si l'adresse physique de source identique à l'adresse physique de destination du paquet figure ou non dans la liste de gestion.

9. Procédé selon la revendication 3, dans lequel la transmission du paquet comprend la transmission du paquet par le biais de l'interface de réseau filaire et de l'interface de réseau sans fil quand l'adresse physique de destination ne figure pas dans la liste de gestion.

10. Procédé selon la revendication 3, dans lequel l'enregistrement de l'entrée, l'opération de réception du paquet et la détermination si l'adresse physique de source est identique ou non à l'adresse physique de destination du paquet figure ou non, et la transmission sélective du paquet par le biais de l'une de l'interface de réseau filaire et de l'interface de réseau sans fil en fonction de l'identifiant sont effectuées quand un mode de communication sans fil du système de communication filaire et sans fil hybride est un mode ad hoc.

11. Procédé selon la revendication 3, dans lequel :
la liste de gestion comprend au moins une adresse physique de source et un identifiant d'interface correspondant à l'adresse physique de source.

12. Procédé selon la revendication 11, dans lequel :
la liste de gestion comprend en outre une indication si l'entrée se rapporte ou non à un système qui communique des paquets de données.

13. Procédé selon la revendication 12, dans lequel la liste de gestion comprend en outre une indication de validité.

14. Procédé selon la revendication 13, dans lequel l'entrée est supprimée à l'expiration d'une durée prédéterminée, en fonction d'une indication de validité.

15. Procédé selon la revendication 13, comprenant en outre si un paquet est reçu depuis une même adresse physique que l'adresse physique de source, la réinitialisation de l'indication de validité.

16. Procédé selon la revendication 3, dans lequel les première et seconde interfaces se partagent une adresse physique commune de telle sorte qu'un premier paquet reçu au niveau d'une première interface par le biais du premier réseau soit adressé à l'adresse physique commune et qu'un second paquet reçu au niveau de la seconde interface par le biais du second réseau soit adressé à l'adresse physique commune.

17. Signal représentant des codes de programme pour commander un ordinateur, ayant une capabilité d'exploitation sur réseau sans fil, afin d'exécuter un procédé selon l'une quelconque des revendications 1 à 16.

18. Support de données sur lequel ou dans lequel est enregistré un signal selon la revendication 17.

19. Appareil de commande de transmission de données sur un réseau hybride ayant une interface de réseau filaire (500) et une interface de réseau sans fil (520), l'interface de réseau sans fil et l'interface de réseau filaire ayant la même adresse physique, l'appareil comprenant :
un moyen (542) pour recevoir un premier paquet par l'intermédiaire de l'une des interfaces (500, 520) ; et
un moyen (560) pour transmettre un second paquet ayant une adresse physique de destination correspondant à une adresse physique de source incluse dans le premier paquet, le moyen de transmission étant agencé pour transmettre le second paquet en utilisant une interface de réseau indiquée par un identifiant de réseau associé à l'adresse physique de source, l'identifiant de réseau identifiant l'interface de réseau par le biais de laquelle le premier paquet a été reçu.

20. Appareil selon la revendication 19, comprenant :
un moyen (550) pour mémoriser des informations de cadencement en association avec l'adresse physique de source ; et
un moyen (540) pour supprimer l'adresse physique de source quand les informations de cadencement atteignent une limite prédéfinie.

21. Carte d'interface de réseau comprenant :
un premier adaptateur pouvant être connecté à la partie filaire du réseau hybride ;
un second adaptateur pouvant être connecté à la partie sans fil de l'hybride ; et
un appareil selon la revendication 19 ou la revendication 20.

22. Ordinateur contenant une carte d'interface de réseau selon la revendication 21.

23. Système de communication filaire et sans fil hybride capable de communiquer par fil et sans fil dans un réseau local, le système de communication filaire et sans fil hybride comprenant un appareil selon la revendication 19 et comprenant de plus :
un moyen exploitable pour recevoir et transmettre des paquets par le biais d'une couche supérieure ;
une unité de mémorisation exploitable pour mémoriser une liste de gestion comprenant l'adresse physique de source d'une source transmettant un paquet et l'identifiant de réseau ;
un module de gestion exploitable quand l'adresse physique de source d'un paquet reçu ne figure pas dans la liste de gestion, pour enregistrer nouvellement l'adresse physique de source et un identifiant de réseau correspondant à l'adresse physique de source dans la liste de gestion ;
un module de commande exploitable sélectivement pour transmettre le paquet par le biais de l'une de l'interface de réseau filaire et de l'interface de réseau sans fil en fonction de l'identifiant de réseau correspondant à une adresse physique de destination du paquet quand l'adresse physique de destination figure dans la liste de gestion ;
l'interface de réseau filaire étant exploitable pour recevoir et transmettre le paquet par le biais du réseau filaire connecté à celle-ci ; et
l'interface de réseau sans fil étant exploitable pour recevoir et transmettre le paquet par le biais du réseau sans fil connecté à celle-ci.

24. Système de communication filaire et sans fil hybride selon la revendication 23, dans lequel chaque entrée comprend en outre une indication si l'entrée se rapporte ou non à un système qui communique des paquets de données.

25. Système de communication filaire et sans fil hybride selon la revendication 24, dans lequel l'unité de mémorisation est exploitable pour supprimer l'entrée quand une durée prédéterminée expire, en fonction d'une indication de validité mémorisée dans la liste de gestion.

26. Système de communication filaire et sans fil hybride selon la revendication 24, dans lequel si un paquet est reçu d'une même adresse physique que l'adresse physique de source, le module de commande est exploitable pour réinitialiser l'indication de validité.

27. Système de communication filaire et sans fil hybride selon la revendication 23, dans lequel le module de commande est exploitable quand il est déterminé que l'adresse physique de destination indique la transmission en monodiffusion pour déterminer si l'adresse physique de destination indique ou non une transmission en monodiffusion, et déterminer si une adresse physique de source identique à l'adresse physique de destination du paquet figure ou non dans la liste de gestion.

28. Système de communication filaire et sans fil hybride selon la revendication 23, dans lequel le module de commande est exploitable pour transmettre le paquet par le biais de l'interface de réseau filaire et de l'interface de réseau sans fil quand l'adresse physique de destination n'est pas enregistrée dans la liste de gestion.

29. Système de communication filaire et sans fil hybride selon la revendication 23, le système de communication filaire et sans fil hybride étant exploitable quand un mode de communication sans fil est un mode ad hoc.

30. Système de communication filaire et sans fil hybride selon la revendication 23, dans lequel :
le module de commande est exploitable pour supprimer l'entrée quand une durée prédéterminée expire, en fonction d'une indication de validité mémorisée dans la liste de gestion.

31. Système de communication filaire et sans fil hybride selon la revendication 30, dans lequel :
la liste de gestion comprend au moins une adresse physique de source et un identifiant d'interface correspondant à l'adresse physique de source.

32. Système de communication filaire et sans fil hybride selon la revendication 31, dans lequel :
si un paquet est reçu depuis la même adresse physique que l'adresse physique de la source, le module de commande est exploitable pour réinitialiser l'indication de validité.

33. Système de communication filaire et sans fil hybride selon la revendication 32, dans lequel :
le module de commande est exploitable pour supprimer l'entrée quand une durée prédéterminée expire, en fonction de l'indication de validité.
